# EUROPÄISCHE PATENTSCHRIFT

(11) **EP 2 823 193 B1**
(45) Veröffentlichungstag und Bekanntmachung des Hinweises auf die Patenterteilung: **30.11.2016**
(21) Anmeldenummer: 13715225.2
(22) Anmeldetag: 10.04.2013
(51) Int. Cl.: F16D 55/224, F16D 65/12, B61H 5/00, F16D 125/64

(54) **BREMSEINHEIT FÜR EIN FAHRZEUG UND FAHRZEUG MIT EINER DERARTIGEN BREMSEINHEIT**
BRAKE UNIT FOR A VEHICLE AND VEHICLE HAVING A BRAKE UNIT OF SAID TYPE
UNITÉ DE FREINAGE POUR UN VÉHICULE ET VÉHICULE POURVU D'UNE TELLE UNITÉ DE FREINAGE

(30) Priorität: 30.04.2012 DE 102012207194
(43) Veröffentlichungstag der Anmeldung: 14.01.2015
(73) Patentinhaber: Siemens Aktiengesellschaft, 80333 München (DE)
(72) Erfinder: BILDSTEIN, Markus, 87534 Oberstaufen (DE); GAILE, Anton, 88299 Leutkirch (DE); SCHIFFERS, Toni, 41812 Erkelenz (DE)
(86) Internationale Anmeldenummer: PCT/EP2013/057479
(87) Internationale Veröffentlichungsnummer: WO 2013/164166

(56) Entgegenhaltungen:
- US-A- 2 174 401
- US-A- 2 357 263
- US-A- 2 375 152
- US-A- 2 890 767

## Beschreibung

Die Erfindung betrifft eine Bremseinheit für ein Fahrzeug, insbesondere für ein Schienenfahrzeug, mit einer Zuspanneinrichtung mit zwei Bremsarmen, die mit Reibbelägen versehen und unter der Einwirkung eines Betätigungselementes zur Herstellung eines Reibschlusses zwischen den Reibbelägen und einer Bremsscheibe über der Bremsscheibe zuspannbar sind, und mit einem Verbindungsteil, an dem die Zuspanneinrichtung gehalten ist, wobei das Verbindungsteil an einem Fahrwerk des Fahrzeugs fest positionierbar ist.

Die Erfindung betrifft auch ein Fahrzeug, insbesondere ein Schienenfahrzeug, mit einem Fahrwerk, an dem eine Achse gehalten ist, auf der eine Bremsscheibe drehfest angeordnet ist und an dem eine derartige Bremseinheit fest positioniert ist, die der Bremsscheibe zugeordnet ist.

Eine gattungsgemäße Bremseinheit ist beispielsweise aus der Druckschrift DE 101 35 796 C1 bekannt. Bei dieser bekannten Bremseinheit kann es im Betriebseinsatz zu einem einseitigen Anliegen der Reibbeläge an der Bremsscheibe kommen. Dieses einseitige Anliegen der Reibbeläge kann beispielsweise durch ungleichmäßigen Verschleiß oder durch Toleranzen bei der Befestigung des Verbindungselementes am Fahrwerk bedingt sein.

Dokument US 2 375 152 offenbart eine Bremseinheit nach dem Oberbegriff des Anspruchs 1.

Der Erfindung liegt die Aufgabe zu Grunde, ein einseitiges Anliegen der Reibbeläge der Bremseinheit an der ihr zugeordneten Bremsscheibe zu verhindern.

Zur Lösung dieser Aufgabe ist bei einer Bremseinheit der oben genannten Art vorgesehen, dass zum Öffnen der Bremsarme jedem der Bremsarme jeweils ein Federelement zugeordnet ist, das sich mit einem ersten Ende an dem Bremsarm und mit einem zweiten Ende an dem Verbindungsteil oder dem Fahrwerk abstützt, wobei jeder der Bremsarme für das ihm zugeordnete der Federelemente einen Schutzrahmen bildet, innerhalb dessen der größte Teil des Federelementes aufgenommen ist, und dass zumindest einer der beiden Bremsarme mit einer Einstelleinrichtung zum Einstellen der Vorspannkraft des an ihm abgestützten Federelementes versehen ist.

Durch die erfindungsgemäße Bremseinheit ist es in vorteilhafter Weise möglich die Bremse im gelösten Zustand aufzuspannen, so dass diese Funktion nicht im Betätigungselement 11 erfolgen muss, sowie eine einstellbare Mittenzentrierung der Bremszange zu gewährleisten.

Durch den Einsatz der beiden voneinander unabhängigen Federelemente, von denen zumindest eines mittels der Einsstelleinrichtung hinsichtlich seiner Vorspannkraft veränderbar ist, ist es insbesondere auch noch nach der Erstmontage im Betriebseinsatz der Bremseinheit möglich, beispielsweise bei ungleichmäßigem Verschleiß der Reibbeläge und der Bremsscheibe, das Lüftspiel zwischen den Reibbelägen und der Bremsscheibe nachzujustieren, wobei durch den besonderen Schutz der Federelemente gegen äußere Einflüsse die Unversehrtheit der Federelemente und damit die Stabilität der eingestellten Vorspannkraft sicher gestellt werden kann.

Gemäß einer technisch besonders leicht umsetzbaren Lösung ist vorgesehen, dass die Einstelleinrichtung eine Einstellschraube und eine Gewindebohrung des Bremsarmes zum Eingriff der Einstellschraube aufweist, wobei das dem Bremsarm zugeordnete erste Ende des Federelementes unmittelbar an der Einstellschraube abgestützt ist.

Vorzugsweise bildet dabei der Bremsarm eine Führung für das an der Einstellschraube abgestützte erste Ende des Federelementes, so dass sichergestellt ist, dass das Federelement nicht seine Abstützung an der Einstellschraube verliert.

Es wird als vorteilhaft angesehen, wenn sich das Federelement mit seinem zweiten Ende unmittelbar in einer am Verbindungsteil ausgebildeten Abstütztasche abstützt. - Die den beiden Federelementen zugeordneten Abstütztaschen können somit auf fertigungstechnisch einfache Weise bei der Urformung des Verbindungsteils als integraler Bestandteil des Verbindungsteils ausgebildet werden.

Ferner wird es als vorteilhaft angesehen, wenn die beiden Bremsarme jeweils zwei über zumindest einen Verbindungssteg fest verbundene Teilarme aufweisen, die den Schutzrahmen bilden. Auch diese über zumindest einen Verbindungssteg fest verbundenen Teilarme können auf fertigungstechnisch einfache Weise bei der Urformung des jeweiligen Bremsarmes ausgebildet werden.

Besonders leicht lassen sich die Federelemente innerhalb der von den Bremsarmen gebildeten Schutzrahmen unterbringen, wenn jedes der beiden Federelemente eine Torsionsfeder ist, deren Federachse parallel zu der Bremsscheibe durch den zugeordneten Bremsarm verläuft.

Dabei können die beiden Bremsarme zur Bildung einer Bremszange jeweils mittels eines Verbindungsbolzens gelenkig mit dem Verbindungsteil verbunden sein, wobei sich die Federachse jeder der Torsionsfedern entlang der Achse des dem jeweiligen Bremsarm zugeordneten Verbindungsbolzens erstreckt und damit hinsichtlich des benötigten Bauraumes besonders optimal untergebracht ist.

Vorzugsweise ist die Torsionsfeder eine um den Verbindungsbolzen gewundene Schenkelfeder oder eine Drehstabfeder, die den Verbindungsbolzen durchgreift oder den Verbindungsbolzen bildet.

Zur weiteren Erläuterung der Erfindung sind in der
- Figur 1: ein Ausschnitt eines ersten erfindungsgemäßen Schienefahrzeugs mit einer ersten Ausführungsform der erfindungsgemäßen Bremseinheit, in den
- Figuren 2 bis 7: die erste Ausführungsform der erfindungsgemäßen Bremseinheit in verschiedenen Ansichten und Schnittdarstellungen, in der
- Figur 8: ein Verbindungsteil der ersten Ausführungsform der erfindungsgemäßen Bremseinheit, über das diese an einem Fahrwerk des Schienenfahrzeugs fest positioniert ist, in der
- Figur 9: einen Ausschnitt eines zweiten erfindungsgemäßen Schienefahrzeugs mit einer zweiten Ausführungsform der erfindungsgemäßen Bremseinheit und in der
- Figur 10: eine Schnittdarstellung der zweiten Ausführungsform der erfindungsgemäßen Bremseinheit gezeigt.

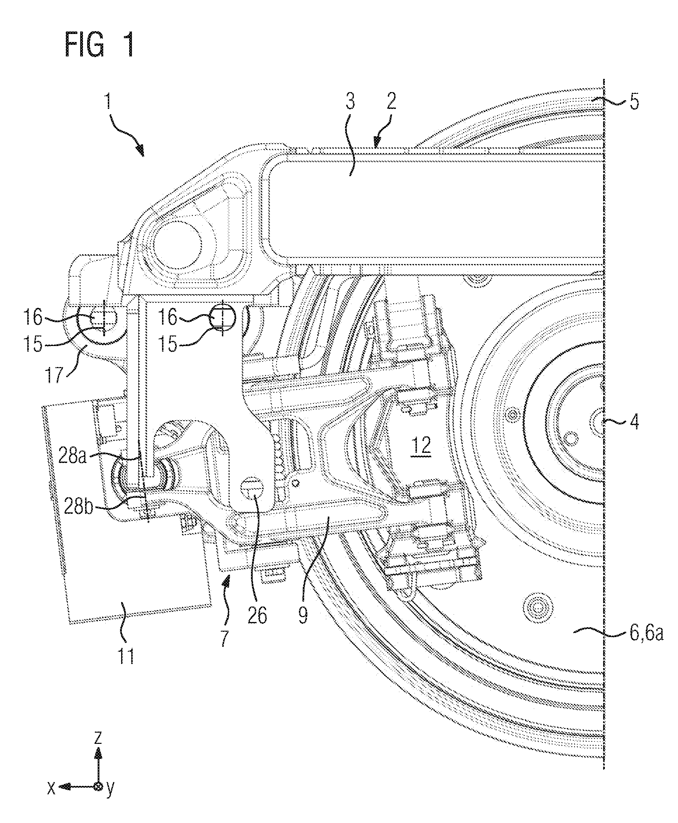

Gemäß Figur 1 weist ein erstes erfindungsgemäßes Fahrzeug 1 in Form eines Schienefahrzeugs ein als Drehgestell ausgebildetes Fahrwerk 2 mit einem Drehgestellrahmen 3 auf. An dem Drehgestellrahmen 3 des Fahrwerkes 2 ist über eine hier nicht gezeigte Primärfederung eine Achse 4 gehalten, auf der zwei Räder drehfest angeordnet sind, von denen hier nur eins 5 gezeigt ist. An den beiden Seiten des gezeigten Rades 5 ist jeweils eine Bremsfläche 6a ausgebildet, so dass das mit den Bremsflächen 6a versehene Rad eine Bremsscheibe 6 in Form einer Radbremsscheibe bildet. Anstelle der Radbremsscheibe könnte aber auch eine Wellenbremsscheibe - also eine neben dem Rad drehfest auf der Achse angeordnete Bremsscheibe vorgesehen sein.

Der Bremsscheibe 6 ist eine erste Ausführungsform der erfindungsgemäßen Bremseinheit 7 zugeordnet, die an dem Drehgestellrahmen 3 des Fahrwerkes fest positioniert ist.

Alternativ hierzu könnte die Bremseinheit jedoch auch an einem Achslagergehäuse oder an einem Getriebegehäuse oder an einem Motorgehäuse des Fahrwerkes (des Drehgestells) fest positioniert und damit abgestützt sein.

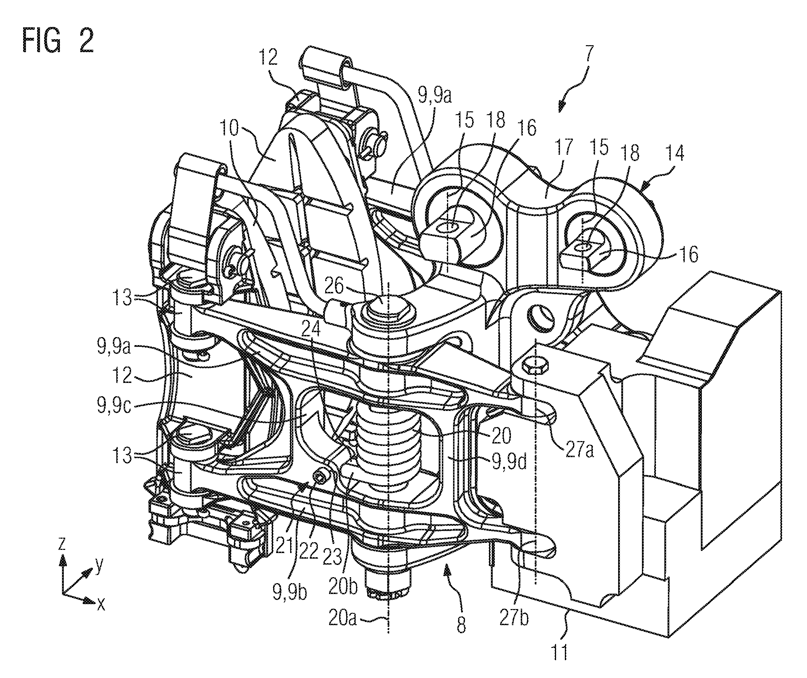

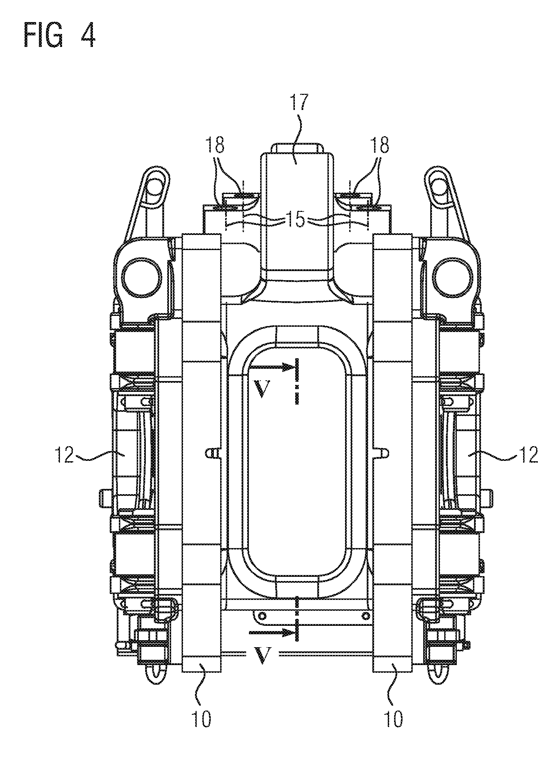

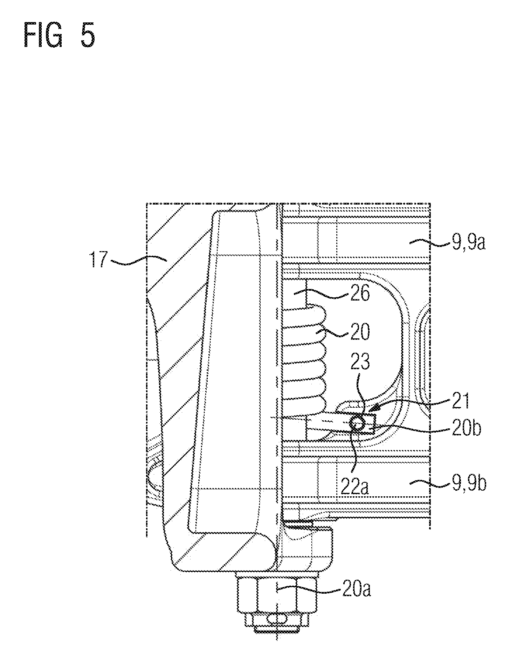

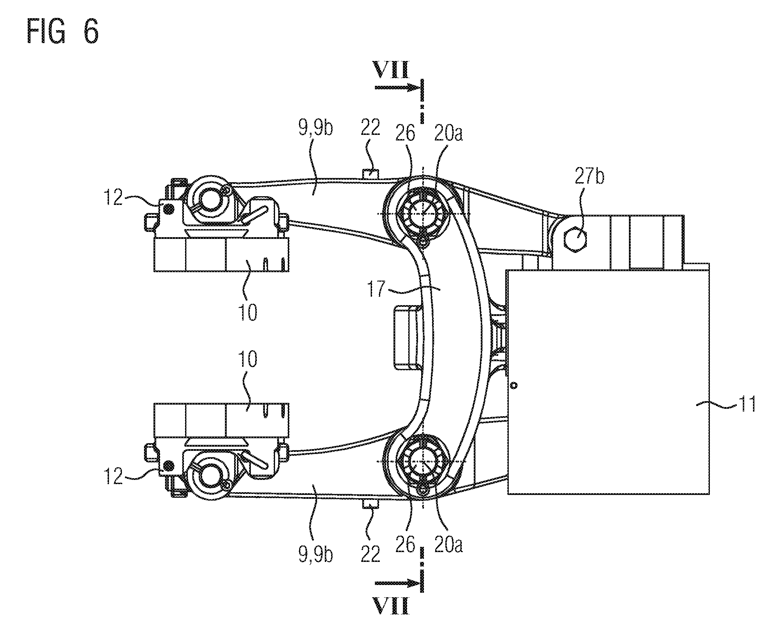

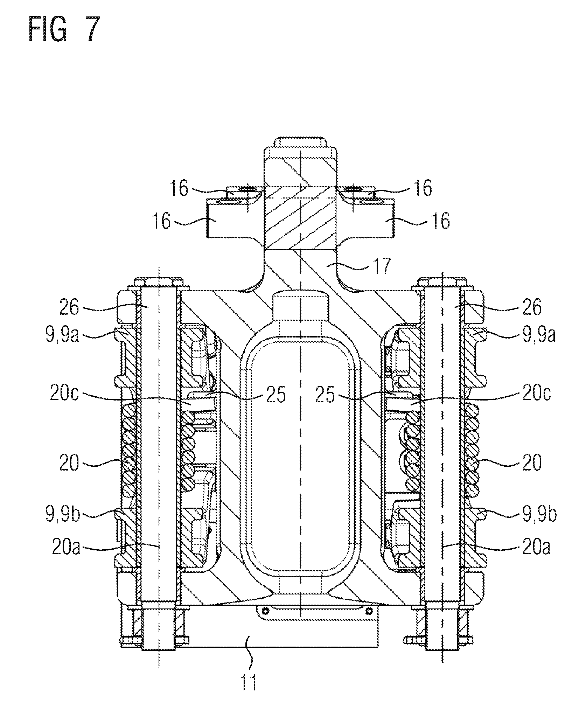

Gemäß den Figuren 2 bis 7 weist die erste Ausführungsform der erfindungsgemäßen Bremseinheit 7 eine als Ganzes mit 8 bezeichnete Zuspanneinrichtung (ein Bremsgestänge) mit zwei Bremsarmen 9 auf. Die Bremsarme 9 sind mit Reibbelägen 10 versehen und unter der Einwirkung eines Betätigungselementes 11 zur Herstellung eines Reibschlusses zwischen den Reibbelägen 10 und den Bremsflächen 6a der Bremsscheibe 6 über der Bremsscheibe 6 zuspannbar. Als Betätigungselement 11 kann beispielsweise ein elektropneumatischer oder ein elektrohydraulischer oder ein elektromechanischer Aktor (Aktuator) zum Einsatz kommen. Die Reibbeläge 10 sind an Belaghaltern 12 befestigt, die über Gelenke 13 gelenkig an den Bremsarmen 9 gehalten sind.

Die Zuspanneinrichtung 8 ist bei der gezeigten Bremseinheit als Bremszange ausgebildet. Die Zuspanneinrichtung könnte aber alternativ auch als Bremssattel ausgebildet werden.

Die Bremseinheit 7 weist weiterhin ein als ganzes mit 14 bezeichnetes Verbindungsteil auf, an dem die Zuspanneinrichtung 8 gehalten ist, wobei das Verbindungsteil 14 mittels hier als strichpunktierte Linien dargestellter Schraubverbindungen 15 an dem Drehgestellrahmen 3 des Fahrwerkes 2 fest positioniert ist.

Das Verbindungsteil 14 umfasst hier eine mit zwei Bolzen 16 versehene Bremsbrücke 17, wobei die beiden Bolzen 16 beidseitig der Bremsbrücke 17 Befestigungsbohrungen 18 zum Durchgriff der Schraubenverbindungen 15 aufweisen.

Während der Erstmontage der Bremseinheit 7 am Drehgestellrahmen 3 des Fahrwerkes 2 ist eine Justierung der Position der Bremseinheit 7 über die Befestigung der Schraubenverbindungen 15 möglich, eine nachträgliche Justierung ist jedoch recht aufwändig.

Hervorgerufen durch ungleichmäßigen Verschleiß der Reibbeläge 10 und der Bremsscheibe 6, durch Relativbewegung des Drehgestelles 2 oder auch durch Schwergängigkeit der Zuspanneinrichtung 8, kann es im Betriebseinsatz nach der Erstmontage der Bremseinheit 7 trotzdem dazu kommen kann, dass nur einer der Bremsbeläge 10 an der Bremsscheibe 6 anliegt bzw. das Lüftspiel an den beiden Reibflächen der Bremse unterschiedlich groß wird. Es kann also im Betriebseinsatz zu einem einseitigen Anliegen der Reibpartner 10, 6 kommen.

Daher ist jedem der beiden Bremsarme 9 jeweils ein Federelement 20 in Form einer Torsionsfeder zugeordnet. Die Federachsen 20a der beiden Torsionsfedern verlaufen jeweils parallel zu den Bremsflächen 6a der Bremsscheibe 6 durch den ihnen zugeordneten der Bremsarme 9. Die Torsionsfedern stützen sich jeweils mit einem ersten Ende 20b an dem zugeordneten Bremsarm und mit einem zweiten Ende 20c an der Bremsbrücke 17 des Verbindungsteils 14 ab.

Alternativ hierzu könnte das zweite Ende der beiden Federelemente auch an einem anderen Bauteil abgestützt sein, welches fest mit der Befestigung der Bremseinheit, die hier vom Bremsrahmen des Fahrwerkes gebildet ist, verbunden ist. Den beiden zweiten Enden der Federelemente könnten also auch Abstützpunkte zugeordnet sein, die direkt im Drehgestell liegen.

Die Vorspannkraft mindestens eines der Federelemente 20 ist einstellbar. Bei der gezeigten Bremseinheit 7 ist jeder der beiden Bremsarme 9 jeweils mit einer Einstelleinrichtung 21 zum Einstellen der Vorspannkraft der an ihm abgestützten Torsionsfeder versehen.

Das Einstellen der Vorspannkräfte der Torsionsfedern bietet die Möglichkeit, im Betriebseinsatz auf einseitiges Anliegen der Reibpartner schnell und einfach reagieren zu können. Es kann also beispielsweise ein Relativ-Versatz der Befestigung (der Aufhängung) der Bremseinheit 7 in Querrichtung y relativ zu den Bremsflächen 6a der Bremsscheibe ausgeglichen und damit die Bremseinheit 7 relativ zu ihrer Aufhängung und relativ zur Bremsscheibe 6 zentriert werden.

Die Einstelleinrichtungen 21 umfassen jeweils eine Einstellschraube 22 (auch als "Verstellschraube" oder "Anschlagschraube" bezeichnet) und eine Gewindebohrung 23 des zugeordneten Bremsarmes 9 zum Eingriff der Einstellschraube 22.

Das dem jeweiligen Bremsarm 9 zugeordnete erste Ende 20b der Torsionsfeder ist dabei jeweils unmittelbar am dem vom Kopf abgewandten freien Ende 22a der Einstellschraube 22 abgestützt. Mittels der Einstelleinrichtungen 21 können im Betriebseinsatz der Bremseinheit 7 Unsymmetrien oder Maßtoleranzen einfach und schnell ausgeglichen werden.

Auf der zur Bremsscheibe 6 weisenden Seite der Bremsarme ist in jedem der Bremsarme ein quer zur Federachse 20a verlaufender Führungsschlitz ausgebildet. Dieser Führungsschlitz dient als Führung 24 für das als hebelartiger Schenkel ausgebildete erste Ende 20b der dem Bremsarm 9 zugeordneten Torsionsfeder.

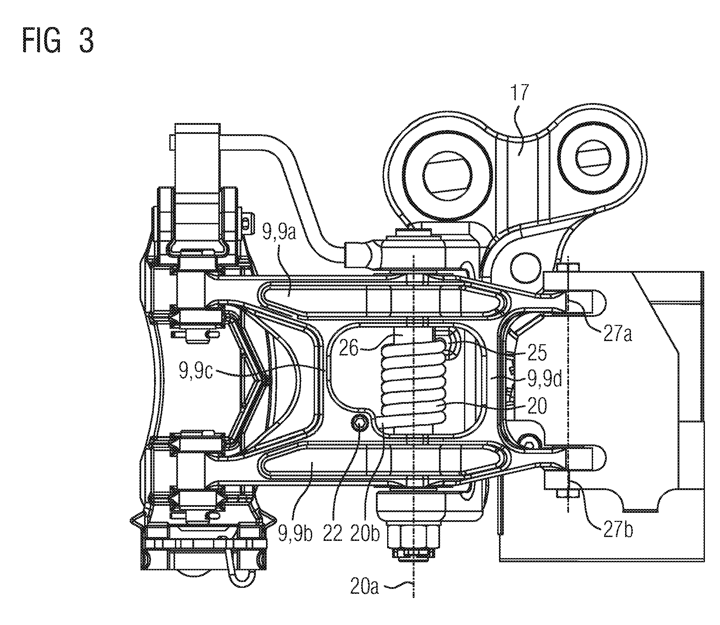

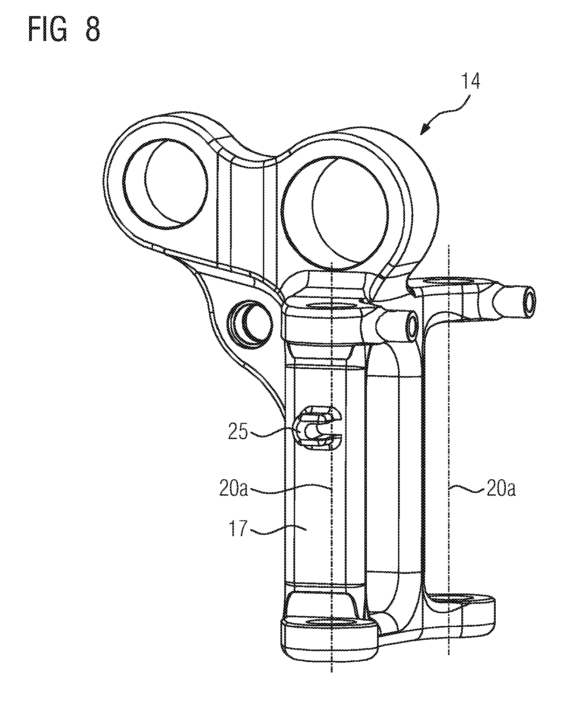

Wie insbesondere den Figuren 3, 7 und 8 zu entnehmen ist, sind an der Bremsbrücke 17 des Verbindungsteils 14 zwei Abstütztaschen 25 ausgebildet. Die Torsionsfedern sind mit ihrem ebenfalls als hebelartiger Schenkel ausgebildeten zweiten Ende 20c jeweils unmittelbar in einer dieser Abstütztaschen 25 abstützt.

Die beiden Bremsarme 9 sind jeweils aus zwei Teilarmen 9a, 9b gebildet, die hier über zwei Verbindungsstege 9c, 9d fest verbunden sind. Dabei erstrecken sich die Verbindungsstege 9c, 9d quer zu den Teilarmen 9a, 9b, so dass sich die Federachsen 20a der Torsionsfedern parallel zu den Verbindungsstegen 9c, 9d erstrecken. Jeder der Bremsarme 9 bildet damit für das ihm zugeordnete der Federelemente 20 einen Schutzrahmen, innerhalb dessen der größte Teil des Federelementes 20 aufgenommen ist. So schützen die in der Hochrichtung z des Schienenfahrzeuges 1 verlaufenden Verbindungsstege 9c, 9d die Federelemente 20 insbesondere vor der Einwirkung in der Längsrichtung x wirkender Schadstoffe. Die Teilarme 9a, 9b schützen die Federelemente 20 insbesondere vor der Einwirkung in der Hochrichtung z wirkender Schadstoffe. Damit kann insbesondere die Beschädigung der Federelemente 20 durch Schadstoffe, die sich im Fahrtwind befinden oder die beim Fahren hoch gewirbelt werden, sehr wirksam unterbunden werden.

Zur Bildung der Bremszange sind die beiden Bremsarme 9 der Zuspanneinrichtung 8 jeweils mittels eines Verbindungsbolzens 26 gelenkig mit der Bremsbrücke 17 des Verbindungsteils 14 verbunden. Die Federachsen 20a der Torsionsfedern erstrecken sich dabei entlang der Achse des dem jeweiligen Bremsarm 9 zugeordneten Verbindungsbolzens 26.

Erste Hebelarme der beiden Teilarme 9a, 9b eines der Bremshebel 9 sind gelenkig mit Aufnahmen 27a, 27b des Betätigungselementes 11 verbunden. Erste Hebelarme der beiden Teilarme 9a, 9b des anderen Bremshebels 9 sind gelenkig mit Aufnahmen 28a, 28b des Betätigungselementes 11 verbunden. Über eine Hubbewegung der Aufnahmen 27a, 27b werden die Aufnahmen 27a, 27b, 28a, 28b auseinander getrieben und damit die ersten Hebelarme auseinander gespreizt. An zweiten Hebelarmen der beiden Teilarme 9a, 9b der Bremshebel 9 sind die mit den Reibbelägen versehenen Belaghalter angelenkt, die beim Auseinanderspreizen der ersten Hebelarme über der Bremsscheibe zugespannt werden.

Bei der in den Figuren 1 bis 7 gezeigten ersten Ausführungsform der erfindungsgemäßen Bremseinheit 7 ist das Federelement 20 eine Torsionsfeder in Form einer um den Verbindungsbolzen 26 gewundenen Schenkelfeder.

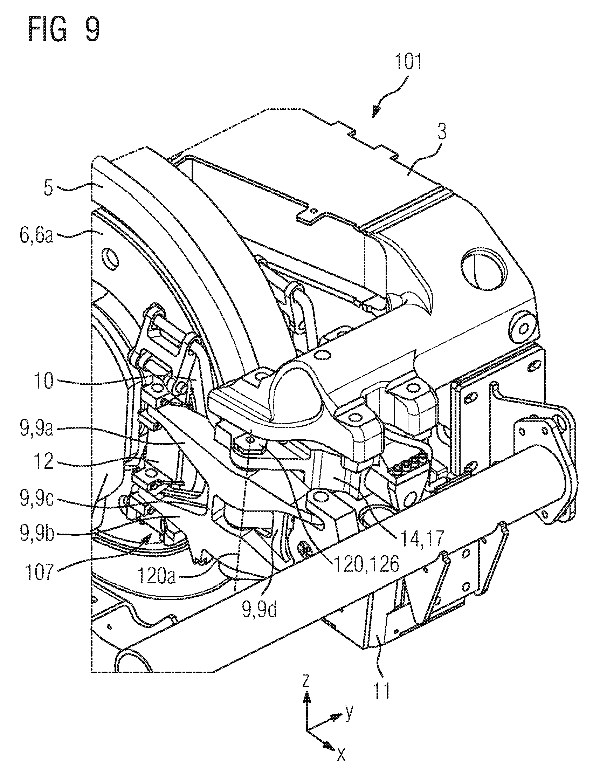

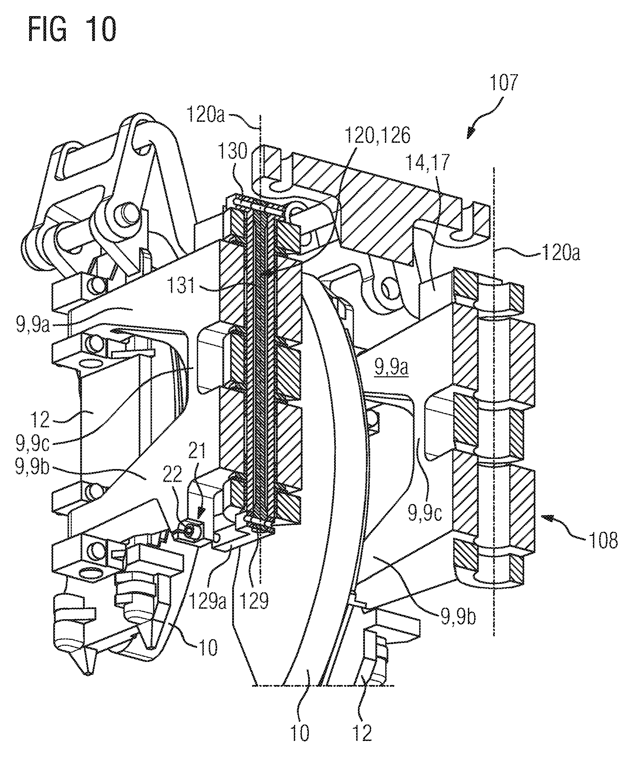

Die Figuren 9 und 10 zeigen eine zweite Ausführungsform der erfindungsgemäßen Bremseinheit 107. Dabei sind die Teile der zweiten Ausführungsform, die denen der ersten Ausführungsform im Wesentlichen gleichen, mit den gleichen Bezugszeichen versehen.

Bei der zweiten Ausführungsform der erfindungsgemäßen Bremseinheit 107 ist jedoch ein Federelement 120 vorgesehen, das als Torsionsfeder in Form einer Drehstabfeder ausgebildet ist. Dabei bildet die Drehstabfeder zugleich den Verbindungsbolzen 126. Die Drehstabfeder weist einen an seinen Enden mit festen Einspannungen 129, 130 versehenen Stab 131 auf. Eine erste 129 der Einspannungen weist einen hebelartigen Schenkel 129a auf, der an der Einstellschraube 22 abgestützt ist. Die zweite 130 der Einspannungen ist drehfest mit der Bremsbrücke 17 des Verbindungselementes 14 verbunden.

Alternativ zu den als Torsionsfedern ausgebildeten Federelementen 20; 120 könnten auch andere Federelemente, beispielsweise in Form von Zug- oder Druckfedern zum Einsatz kommen.

Die beiden Ausführungsformen der erfindungsgemäßen Bremseinheit 7; 107 zeichnen sich durch ihren besonders einfachen Aufbau und durch leichte Bedienbarkeit hinsichtlich der Einstellung der Vorspannkraft ihrer Federelemente 20; 120 aus. Sie stellen kostengünstige Lösungen dar, um auf die betrieblich auftretenden einseitigen Kontakte der Reibpartner reagieren zu können.

Neben der Funktion, das Luftspiel der Reibbeläge 10 beidseitig der Bremsscheibe 6 gleich zu gestalten (Zentrierfunktion), erfüllen die Federelemente 20; 120 auch eine weitere Funktion. Die weitere Funktion besteht darin, die Bremsarme zu öffnen, wenn das Betätigungselement 11 keine Betätigungskraft zum Zuspannen der Zuspannrichtung 8 in die Zuspanneinrichtung einleitet (Rückstellfunktion).

## Patentansprüche

1. Bremseinheit (7; 107) für ein Fahrzeug (1), insbesondere für ein Schienenfahrzeug,
- mit einer Zuspanneinrichtung (8; 108) mit zwei Bremsarmen (9), die mit Reibbelägen (10) versehen und unter der Einwirkung eines Betätigungselementes (11) zur Herstellung eines Reibschlusses zwischen den Reibbelägen (10) und einer Bremsscheibe (6) über der Bremsscheibe (6) zuspannbar sind, und
- mit einem Verbindungsteil (14), an dem die Zuspanneinrichtung (8; 108) gehalten ist,
- wobei das Verbindungsteil (14) an einem Fahrwerk (2) des Fahrzeugs (1) fest positionierbar ist, wobei
- zum Öffnen der Bremsarme (9) jedem der Bremsarme (9) jeweils ein Federelement (20; 120) zugeordnet ist, das sich mit einem ersten Ende (20b; 129a) an dem Bremsarm (9) und mit einem zweiten Ende (20c; 130) an dem Verbindungsteil (14) oder dem Fahrwerk (2) abstützt, wobei
- zumindest einer der beiden Bremsarme (9) mit einer Einstelleinrichtung (21) zum Einstellen der Vorspannkraft des an ihm abgestützten Federelementes (20; 120) versehen ist, **dadurch gekennzeichnet, dass** jeder der Bremsarme (9) für das ihm zugeordnete der Federelemente (20; 120) einen Schutzrahmen bildet, innerhalb dessen der größte Teil des Federelementes (20; 120) aufgenommen ist.

2. Bremseinheit (7; 107) nach Anspruch 1,
**dadurch gekennzeichnet, dass**
die Einstelleinrichtung (21) eine Einstellschraube (22) und eine Gewindebohrung (23) des Bremsarmes (9) zum Eingriff der Einstellschraube (22) aufweist, wobei das dem Bremsarm (9) zugeordnete erste Ende (20b; 129a) des Federelementes (20; 120) unmittelbar an der Einstellschraube (22) abgestützt ist.

3. Bremseinheit (7) nach Anspruch 2,
**dadurch gekennzeichnet, dass**
der Bremsarm (9) eine Führung (24) für das an der Einstellschraube (22) abgestützte erste Ende (20b) des Federelementes bildet.

4. Bremseinheit (7) nach einem der Ansprüche 1 bis 3,
**dadurch gekennzeichnet, dass**
sich das Federelement (20) mit seinem zweiten Ende (20c) unmittelbar in einer am Verbindungsteil (14) ausgebildeten Abstütztasche (25) abstützt.

5. Bremseinheit (7; 107) nach einem der Ansprüche 1 bis 4,
**dadurch gekennzeichnet, dass**
die beiden Bremsarme (9) jeweils zwei über zumindest einen Verbindungssteg (9c, 9d) fest verbundene Teilarme (9a, 9b) aufweisen, die den Schutzrahmen bilden.

6. Bremseinheit (7; 107) nach einem der Ansprüche 1 bis 5,
**dadurch gekennzeichnet, dass**
jedes der beiden Federelemente (20; 120) eine Torsionsfeder ist, deren Federachse (20a; 120a) parallel zu der Bremsscheibe (6) durch den zugeordneten Bremsarm (9) verläuft.

7. Bremseinheit (7; 107) nach Anspruch 6,
**dadurch gekennzeichnet, dass**
- die beiden Bremsarme (9) zur Bildung einer Bremszange jeweils mittels eines Verbindungsbolzens (26; 126) gelenkig mit dem Verbindungsteil (14) verbunden sind,
- wobei sich die Federachse (20a; 120a) jeder der Torsionsfedern entlang der Achse des dem jeweiligen Bremsarm (9) zugeordneten Verbindungsbolzens (26; 126) erstreckt.

8. Bremseinheit (7) nach Anspruch 7,
**dadurch gekennzeichnet, dass**
die Torsionsfeder (20) eine um den Verbindungsbolzen (26) gewundene Schenkelfeder ist.

9. Bremseinheit (107) nach Anspruch 7,
**dadurch gekennzeichnet, dass**
die Torsionsfeder (120) eine Drehstabfeder ist, wobei die Drehstabfeder den Verbindungsbolzen durchgreift oder den Verbindungsbolzen (126) bildet.

10. Fahrzeug (1), insbesondere Schienenfahrzeug,
- mit einem Fahrwerk (2), an dem eine Achse (4) gehalten ist, auf der eine Bremsscheibe (6) drehfest angeordnet ist, und an dem eine Bremseinheit (7; 107) fest positioniert ist, die der Bremsscheibe (6) zugeordnet ist,
**dadurch gekennzeichnet, dass** die Bremseinheit (7; 107) nach einem der Ansprüche 1 bis 9 ausgebildet ist.

## Claims

1. Brake unit (7; 107) for a vehicle (1), in particular for a rail vehicle,
- having a clamping device (8; 108) with two brake arms (9), which are provided with friction linings (10) and can be clamped over the brake disc (6) under the action of an actuation element (11) for producing a friction fit between the friction linings (10) and a brake disk (6), and
- having a connecting part (14), on which the clamping device (8; 108) is held,
- wherein the connecting part (14) can be firmly positioned on a chassis (2) of the vehicle (1),
wherein in order to open the brake arms (9), a spring element (20; 120) is assigned to each of the brake arms (9) in each case, said spring element resting with a first end (20b; 129a) against the brake arm (9) and with a second end (20c; 130) against the connecting part (14) or the chassis (2), wherein at least one of the two brake arms (9) is provided with a setting device (21) for setting the clamping force of the spring element (20; 120) resting thereagainst, **characterised in that** each of the brake arms (9) forms a protective frame for the one of the spring elements (20, 120) assigned thereto, within which protective frame the largest part of the spring element (20; 120) is received.

2. Brake unit (7; 107) according to claim 1,
**characterised in that**
the setting device (21) has a setting screw (22) and a threaded hole (23) of the brake arm (9) for engagement with the setting screw (22), wherein the first end (20b; 129a) of the spring element (20; 120) assigned to the brake arm (9) rests directly against the setting screw (22).

3. Brake unit (7) according to claim 2,
**characterised in that**
the brake arm (9) forms a guide (24) for the first end (20b) of the spring element resting against the setting screw (22).

4. Brake unit (7) according to one of claims 1 to 3,
**characterised in that**
the spring element (20) with its second end (20c) rests directly in a supporting pocket (25) embodied on the connecting part (14).

5. Brake unit (7; 107) according to one of claims 1 to 4,
**characterised in that** the two brake arms (9) each have two sub arms (9a, 9b), which form the protective frame and are firmly connected by way of at least one connecting web (9c, 9d).

6. Brake unit (7; 107) according to one of claims 1 to 5,
**characterised in that** each of the two spring elements (20; 120) is a torsion spring, the spring axis (20a; 120a) of which runs through the assigned brake arm (9) in parallel with the brake disk (6).

7. Brake unit (7; 107) according to claim 6,
**characterised in that**
- the two brake arms (9) for forming a brake calliper are each connected in a hinged manner to the connecting part (14) by means of a connecting bolt (26; 126),
- wherein the spring axis (20a; 120a) of each of the torsion springs extends along the axis of the connecting bolt (26; 126) assigned to the respective brake arm (9).

8. Brake unit (7) according to claim 7, **characterised in that** the torsion spring (20) is a leg spring wound around the connecting bolt (26).

9. Brake unit (107) according to claim 7,
**characterised in that** the torsion spring (120) is a torsion bar spring, wherein the torsion bar spring passes through the connecting bolt or forms the connecting bolt (126).

10. Vehicle (1), in particular rail vehicle,
- having a chassis (2), on which an axis (4) is held, on which a brake disk (6) is arranged in a torque proof manner, and on which a brake unit (7; 107) is firmly positioned, which is assigned to the brake disk (6), **characterised in that** the brake unit (7; 107) is embodied according to one of claims 1 to 9.

## Revendications

1. Unité ( 7; 107 ) de freinage d'un véhicule ( 1 ), notamment d'un véhicule ferroviaire,
- comprenant un dispositif ( 8; 108 ) de serrage ayant deux bras ( 9 ) de frein, qui sont pourvus de garnitures ( 10 ) de friction et qui, sous l'effet d'un élément ( 11 ) d'actionnement, peuvent être serrés par un disque ( 6 ) de frein pour produire une friction entre les garnitures ( 10 ) de friction et le disque ( 6 ) de frein, et
- comprenant une partie ( 14 ) de liaison qui est retenue au dispositif ( 8; 108 ) de serrage,
- dans laquelle la partie ( 14 ) de liaison peut être mise en position fixe sur un train ( 2 ) de roulement du véhicule ( 1 ),
dans laquelle
pour ouvrir les bras ( 9 ) de frein, il est associé à chaque bras ( 9 ) de frein, respectivement un élément ( 20; 120 ) à ressort, qui s'appuie par une première extrémité ( 20b; 129a ) sur le bras ( 9 ) de frein et par une seconde extrémité ( 20c; 130 ) sur la partie ( 14 ) de liaison ou sur le train ( 2 ) de roulement, dans laquelle
- au moins l'un des deux bras ( 9 ) de frein est pourvu d'un dispositif ( 21 ) de réglage pour régler la force de précontrainte de l'élément ( 20; 120 ) à ressort qui s'y appuie, **caractérisé en ce que** chacun des bras ( 9 ) de frein forme, pour celui des éléments ( 20; 120 ) à ressort qui lui est associé, un cadre de protection dans lequel la plus grande partie de l'élément ( 20; 120 ) à ressort est reçue.

2. Unité ( 7; 107 ) de freinage suivant la revendication 1,
**caractérisée en ce que**
le dispositif ( 21 ) de réglage a une vis ( 22 ) de réglage et un taraudage ( 23 ) du bras ( 9 ) de frein pour le vissage de la vis ( 22 ) de réglage, la première extrémité ( 20b; 129a ), associée au bras ( 9 ) de frein, de l'élément ( 20; 120 ) à ressort, s'appuyant directement sur la vis ( 22 ) de réglage.

3. Unité ( 7 ) de freinage suivant la revendication 2,
**caractérisée en ce que**
le bras ( 9 ) de frein forme un guidage ( 24 ) pour la première extrémité ( 20b ) de l'élément à ressort appuyé sur la vis ( 22 ) de réglage.

4. Unité ( 7 ) de freinage suivant l'une des revendications 1 à 3,
**caractérisée en ce que**
l'élément ( 20 ) à ressort s'appuie, par sa seconde extrémité, ( 20c ) directement dans une poche ( 25 ) d'appui constituée sur la partie ( 14 ) de liaison.

5. Unité ( 7; 107 ) de freinage suivant l'une des revendications 1 à 4,
**caractérisée en ce que**
les deux bras ( 9 ) de frein ont respectivement deux bras ( 9a, 9b ) partiels, qui sont reliés fixement par au moins une entretoise ( 9c, 9d ) de liaison et qui forment le cadre de protection.

6. Unité ( 7; 107 ) de freinage suivant l'une des revendications 1 à 5,
**caractérisée en ce que**
chacun des éléments ( 20; 120 ) à ressort est un ressort de torsion, dont l'axe ( 20a; 120a ) s'étend parallèlement au disque ( 6 ) de frein en traversant le bras ( 9 ) de frein associé.

7. Unité ( 7; 107 ) de freinage suivant la revendication 6,
**caractérisée en ce que**
- les deux bras ( 9 ) de frein sont, pour former un étrier, articulés à la partie ( 14 ) de liaison au moyen d'un boulon ( 26; 126 ) de liaison,
- les axes ( 20a; 120a ) de chacun des ressorts de torsion s'étendant le long de l'axe du boulon ( 26; 126 ) de liaison associé à chaque bras ( 9 ) de frein.

8. Unité ( 7 ) de freinage suivant la revendication 7,
**caractérisée en ce que**
le ressort ( 20 ) de torsion est un ressort spiral enroulé autour du boulon ( 26 ) de liaison.

9. Unité ( 107 ) de freinage suivant la revendication 7,
**caractérisée en ce que**
le ressort ( 120 ) de torsion est un ressort à barre de torsion, le ressort à barre de torsion traversant le boulon de liaison ou formant le boulon ( 126 ) de liaison.

10. Véhicule ( 1 ), notamment véhicule ferroviaire,
- comprenant un train ( 2 ) de roulement, auquel est retenu un essieu ( 4 ) solidaire en rotation d'un disque ( 6 ) de frein et sur lequel une unité ( 7; 107 ) de freinage peut être positionnée de manière fixe, laquelle est associée au disque ( 6 ) de frein,
**caractérisé en ce que** l'unité ( 7; 107 ) de freinage est constituée suivant l'une des revendications 1 à 9.
